Europäisches Patentamt

European Patent Office

Office européen des brevets

(19)

(11) Veröffentlichungsnummer: **0 099 106**
A2

# (12) EUROPÄISCHE PATENTANMELDUNG

(21) Anmeldenummer: 83106822.6

(22) Anmeldetag: 12.07.83

(51) Int. Cl.³: **C 05 D 9/00**

(30) Priorität: 14.07.82 DE 3226226

(43) Veröffentlichungstag der Anmeldung:
25.01.84 Patentblatt 84/4

(84) Benannte Vertragsstaaten:
AT BE CH DE FR GB IT LI LU NL SE

(71) Anmelder: Holland, Berndt
Marktstrasse 6
D-5480 Remagen(DE)

(71) Anmelder: Mennenga, Willrich
Gut Erbsenbinderei Upleward
D-2974 Krummhörn 1(DE)

(71) Anmelder: Vendel, Rainer
Alter Fuhrweg 50a
D-5480 Remagen(DE)

(72) Erfinder: Holland, Berndt
Marktstrasse 6
D-5480 Remagen(DE)

(74) Vertreter: Arentoft, Holger
Gartenstrasse 18
D-5461 Kasbach-Ohlenberg(DE)

(54) Anorganischer Naturdünger.

(57) Gemäß der Erfindung wird als Naturdünger Basaltstaub verwendet, entweder allein oder im Zusammenwirken mit anderen Düngemitteln (Wirtschaftsdünger, Handelsdünger).

Basaltstaub als Düngemittel weist eine Reihe von überraschenden Vorzügen auf, die umsomehr überraschen, weil er gar keinen Stickstoff und prozentual nur wenig von den übrigen Makronährstoffen Kali, Salpeter und Phosphat enthält. Der Basaltstaub entgiftet den Boden, wirkt Versäuerung entgegen und vermittelt den Pflanzen ein gesundes Wachstum und eine deutliche Farbintensität. Ferner wirkt er wärmedämmend und wasserspeichernd.

EP 0 099 106 A2

- 2 -

Beschreibung

Die Erfindung bezieht sich auf einen anorganischen Naturdünger zur Unterstützung bekannter Düngeverfahren, aber auch zur Alleindüngung von Gartenböden, Ackerböden u.a. Böden.

Neben dem altbekannten organischen Wirtschaftsdünger, der im Stall produziert wird oder durch Verrottung von Abfällen als Kompost entsteht, werden den Böden seit mehr als einem Jahrhundert (seit LIEBIG) anorganische Düngemittel, die sogenannten Handelsdünger, beigegeben, in der Hauptsache Nitrate (Chilisalpeter), Phosphate, Kalisalze und Gemische dieser Stoffe. Eine Düngung mit Wirtschaftdünger allein ist heute undenkbar, schon wegen der großen Mengen, die erforderlich wären, und wegen der Arbeitskosten der Verteilung, aber auch deswegen, weil die Wirtschaftsdünger nicht alles enthalten, was der Boden und die Pflanzen benötigen. Die heutigen großen landwirtschaftlichen und gärtnerischen Erträge sind nur mit Handelsdüngern zu erzielen.

Bei der Beigabe von Handelsdüngern wird die vorher ermittelte Zusammensetzung des Bodens sowie die vorgesehene Fruchtart berücksichtigt. Insbesondere für die Nitrate gilt, daß die Handelsdünger nicht zu früh auf den Boden aufgebracht werden, da sie sonst vom Regen teilweise in den Untergrund gespült werden und nach wiederholter Düngung einen Überschuß an Giftstoffen produzieren. In bezug auf die nützlichen Wirkstoffe ist die Wirkung der bekannten Handelsdünger kurzlebig, während die Jahr für Jahr gebildeten Giftstoffe im Wurzelbereich der Pflanzen verbleiben und außerordentlich langlebig sind. Nitratdünger werden weitgehend zu Salpetersäure oxydiert,
ein Vorgang, der gerade in den letzten Jahren bedenkliche Ausmaße erreicht, weil die Böden ohnehin
durch den fatalen "sauren Regen" versäuert werden.

Ferner unterstützen die bekannten Handelsdünger den
Sauerstoffbereich der Pflanzen nur ungenügend, während durch die zunehmende Verschmutzung und Versäuerung des Regenwassers eine Anreicherung des Bodens und der Pflanzenwurzeln mit Sauerstoff erschweren.

Durch die Verschmutzung und Versäuerung des Regenwassers, durch die sonstige Verschmutzung mit Salz,
durch unzulängliche Klärverfahren der Abwässer usw.
sowie durch die zunehmende Vergiftung der Böden mit
Pflanzenschutzmitteln ergibt sich allmählich eine
Situation für die Fruchtböden, bei welchen man über
brauchbare Auswege nachdenken muß - im Übrigen auch
für die Waldböden.

Die Erfindung hat zur Aufgabe, einen neuen Handelsdünger zu schaffen, der zusammen mit den herkömmlichen Düngemitteln, gegebenenfalls auch aber allein
imstande ist, die angeführten Mängel zumindest teilweise zu beseitigen. Diese Aufgabe wird durch den im
Patentanspruch beschriebenen Einsatz von Basaltstaub
als Handelsdünger gelöst.

Basaltstaub fällt bei der Basaltgewinnung in großen Mengen an und wurde bisher im Wesentlichen nur als Zugabe zu Beton und Bitumen im Straßenbau verwendet; der meiste Basaltstaub wandert jedoch nutzlos auf Halde. Die Testversuche, auf denen die Erfindung begründet ist, fanden mit Basaltstaub des Kalkalkalibasalts statt; es wurde jedoch im geringeren Umfang auch Alkalibesalt (Plagioklasbasalt) verwendet, dessen Zusammensetzung nur geringfügig abweicht.

Die Zusammensetzung des bei den Testversuchen verwendeten Alkalibasaltstaubs ist wie folgt:

| Kieselsäure | $SiO_2$ | 50,3% |
| Tonerde | $Al_2O_2$ | 12.8% |
| Eisenoxyd | $Fe_2O_3$ | 11.7% |
| Magnesia | $MgO$ | 7,4% |
| Calciumoxyd | $CaO$ | 11.1% |
| Natriumoxyd | $Na_2O$ | 2,4% |
| Kaliumoxyd | $K_2O$ | 0,4% |
| Titanoxyd | $TiO_2$ | 3,1% |
| Phosphorsäure | $P_2O_5$ | 0,3% |

In geringeren Mengen enthält der Basalt weiterhin:

| Wasser | $H_2O$ | |
| Fluor | $F$ | |
| Chlor | $Cl$ | |
| Bor | $B$ | insgesamt 0,5% |
| Kohlensäure | $CO_2$ | |
| Schwefelwasser-stoff | $H_2S$ | |
| Mangan | $MnO$ | |

'Hierbei fällt auf, daß keine der klassischen Düngemittelkomponenten, der sogenannten Makronährstoffe
Stickstoff, Kalium, Calcium und Magnesium, in großen
Relativmengen vorhanden sind, Stickstoff sogar überhaupt nicht. Dagegen enthält der Basaltstaub Mikronährstoffe (Schwefel, Eisen, Bor, Mangan, Schwefel)
in relativ größeren Mengen. Wie diese Wirkstoffe den
Boden aufbereiten und dem Düngerbedürfnis des Bodens
und der Pflanzen in Einzelheiten gerecht werden, ist
Gegenstand laufender Testversuche, deren Ergebnis
wegen der naturbedingten zeitlichen Ausdehnung solcher Versuche erst viel später vorliegen können. Die
heute schon vorliegenden Testversuche zeigen jedoch
eindeutig die günstige Düngewirkung des Basaltstaubs
auf.

Die bisher durchgeführten und die noch laufenden
Testversuche sind in Ostfriesland und im Rheinland
(Bad Neuenahr und Remagen) beheimatet. Für die Testversuche in Ostfriesland ist teils ein vorher noch
nicht bebauter Jungboden und teils ein normaler,
landwirtschaftlich schon bebauter Boden verwendet
worden, damit Vergleiche zwischen einer Alleindüngung
mit Basaltstaub und einer Zugabedüngung angestellt
werden können. Der schon vorher angebaute Boden wurde
zwar nur mit Basaltstaub gedüngt, enthält aber bereits von dem früheren Anbau her Reste von Handelsdüngern und Wirtschaftsdüngern.

Die Testversuche im Rheinland finden ausschließlich
auf Gartenböden statt, die vom früheren Anbau her
Reste von Düngern herkömmlicher Art enthalten. Auch hier wird ausschließlich mit Basaltstaub gedüngt. Einige der Gartenböden in Remagen sind Lehrböden, die am Anfang der Testversuche versäuert und stark ausgelaugt waren. Dagegen waren die Gartenböden in Bad Neuenahr schon am Anfang der Testversuche in einem guten Zustand.

Die bisher vollendeten Testversuche weisen überraschende Erfolge auf. In Ostfriesland wurde der vom Meer her stark vergiftete Jungboden (Öl, Salz, Haushaltsabwässer u.dgl.) innerhalb der Testzeit (Jahr 1981) weitgehend entgiftet und regeneriert heute zusehends. Aus den vergifteten Testböden sind bereits nach dieser kurzen Zeit brauchbare und relativ gesunde Ackerböden geworden. Die ostfriesischen Altböden, die zwar bis auf eine Übersäuerung nicht anormal vergiftet aber doch sehr karg waren, wurden in der Testzeit entgiftet und brachten ein im Vergleich zu den umliegenden Böden gutes Ernteergebnis.

Ein gleiches Ergebnis zeigten die Testversuche im Rheinland. Im Gartenbau (Stadtgärtnerei Bad Neuenahr, Gärtnerei Gebr. Breuer, Remagen, Gärten der Erfinder u.a.m.) wurde folgendes festgestellt:

1) die Böden wurden relativ schnell und gründlich entgiftet,

2) der Basaltstaub wirkt dem schädlichen "sauren Regen" entgegen und entsäuert den Boden,

3) in Feuchtigkeit bläht sich der Basaltstaub und nimmt Sauerstoff auf, der an die Pflanzenwurzeln weitergegeben wird,

4) der Basaltstaub wirkt wasserspeichernd und wärmedämmend,

5) die Pflanzen zeigen ein überdurchschnittliches Wachstum auf, und zwar bei einer überraschenden Farbintensität.

Diese Testergebnisse sind für den Fachmann außerordentlich überraschend, insbesondere weil der Basaltstaub relativ wenig von den klassischen Makronährstoffen enthält: vom Stickstoff überhaupt nichts und von Kalium, Calcium, Magnesium und Phosphat nur prozentual geringe Mengen.

Die beschriebenen Testversuche werden auch in den kommenden Jahren weitergeführt.

- - - - - - - - - -

<u>P a t e n t a n s p r u c h</u>

1. Anorganischer Naturdünger
   zur Unterstützung bekannter Düngeverfahren,
   aber auch zur Alleindüngung von Gartenböden,
   Ackerböden und anderen Böden,

   dadurch gekennzeichnet, daß als Düngemittel
   Basaltstaub verwendet wird.